Europäisches Patentamt

European Patent Office

Office européen des brevets

(19)

(11) Veröffentlichungsnummer: **0 298 147 B1**

(12) **EUROPÄISCHE PATENTSCHRIFT**

(45) Veröffentlichungstag der Patentschrift: 09.10.91

(51) Int. Cl.⁵: **B65G 67/60**

(21) Anmeldenummer: **87109924.8**

(22) Anmeldetag: **09.07.87**

(54) **Vorrichtung zum Be- und Entladen, insbesondere von Schiffen mit Stückgut, insbesondere von beladenen Paletten.**

(43) Veröffentlichungstag der Anmeldung:
**11.01.89 Patentblatt 89/02**

(45) Bekanntmachung des Hinweises auf die
Patenterteilung:
**09.10.91 Patentblatt 91/41**

(84) Benannte Vertragsstaaten:
**AT BE CH DE ES FR GB GR IT LI LU NL SE**

(56) Entgegenhaltungen:
**DE-B- 1 274 505**
**US-A- 1 525 950**

(73) Patentinhaber: **ATEBA Automatisieren-**
**Technik-Bauen für Gewerbe und Industrie**
**GmbH**
**Wiesbadener Strasse 64**
**W-6240 Königstein/TS(DE)**

(72) Erfinder: **Eckel,Wilfried, Dipl. Ing.**
**Dachsteinweg 8**
**W-1000 Berlin 42(DE)**

(74) Vertreter: **Richter, Joachim, Dipl.-Ing. et al**
**Patentanwälte Richter, J., Dipl.-Ing. Gerbau-**
**let, H., Dipl.-Ing. Neuer Wall 10**
**W-2000 Hamburg 36(DE)**

**Beschreibung**

Die Erfindung betrifft eine Vorrichtung zum Be- und Entladen,insbesondere von Schiffen mit Stückgut, insbesondere von beladenen Paletten, bestehend aus einem Portal mit einem eine Transportgutzuführ-oder -ableitbahn aufweisenden, höhenverschwenkbaren Auslegerarm, der an seinem freien Ende einen Senkrechtförderer trägt, der mit der Transportgutzuführ-oder -ableitbahn zusammenarbeitet und der an seinem unteren Ende eine Transportgutaufnahme- oder -abgabeeinrichtung trägt, wobei der Auslegerarm aus einem mit seinem einen Ende an dem Portal gehaltenen und um eine waagerechte Schwenkachse höhenverschwenkbaren Tragarm besteht.

Durch die DE-A-1 290 875 ist eine solche Vorrichtung zum Be- und Entladen, insbesondere von Schiffen mit Stück- und/oder Schüttgut, bestehend aus einem Portal und einem einen Förderer aufweisenden höhenverschwenkbaren Auslegerarm, der an seinem freien Ende ein senkrechtes Trägergestell mit einem wendelförmigen, als über Leitrollen geführtes, endloses Förderband ausgebildetes Förderorgan trägt, dessen oberes freies Ende im Abgabebereich der Abgabeseite des in dem verschwenkbaren Auslegerarm gelagerten Förderers angeordnet ist, dem auf der Brückenplattform vorgesehene Zuführbänder vorgeschaltet sind, bekannt, wobei oberhalb des in dem Trägergestell gehaltenen wendelförmigen Förderers ein zweiter wendelförmiger Förderer in einem innerhalb des Trägergestells geführten und um seine Längsachse drehbaren Haltegestell angeordnet ist, das an seiner Außenwandung mit schraubengewindeförmigen Profilierungen versehen ist, die mit an der Innenwandung des Trägergestells ausgebildeten Gegenprofilen in Eingriff stehen, die und die Profilierungen der Steigung der Wendel der Förderer entsprechend ausgebildet sind, von denen der obere Förderer eine seiner oberen Umlenktrommel vorgeschaltete Überleitwalze aufweist, die in Förderrichtung umlaufend angetrieben und im Haltegestell für den Förderer gelagert ist.

Des weiteren ist durch die DE-A-26 22 399 ein Senkrechtförderer zum Be- oder Entladen, insbesondere von Schiffen mit Stückgütern, mit einer senkrechten Transportbahn, die am bodenseitigen Ende mit einer Transportgutaufnahme- oder -abgabeeinrichtung und am oberen Ende mit einem feststehenden Transportgutzuführ- oder -ableitband in Verbindung steht, und die in einem Traggestell angeordnet ist, das mit seinem oberen Ende an einem feststehenden Traggerüst gehalten und in diesem um eine senkrechte Achse drehbar ist, und mit einem eine mittige Durchbrechung zum Hindurchführen der senkrechten Transportbahn und einen Abstreifer abweisenden Drehteller zum Überleiten des Transportgutes von der senkrechten Transportbahn auf das Transportgutzuführband oder umgekehrt, bekannt, wobei in dem Traggestell oberhalb des Drehtellers im Abgabe- oder Zuführbereich der senkrechten Transportbahn ein Gurtförderband angeordnet ist, das an seinem der senkrechten Transportbahn abgekehrten Ende mit einem plattenförmigen, um eine senkrechte Mittelachse verschwenkbaren Abstreifer versehen ist und das zu beiden Seiten seines der senkrechten Transportbahn abgekehrten Endes sich zum Drehteller hin erstreckende Überleitbahnen aufweist, und wobei im Bereich des feststehenden Transportgutzuführ- oder -ableitbandes ein weiterer Abstreifer oberhalb des Drehtellers um eine senkrechte Mittelachse verschwenkbar ist.

Beide bekannten Schiffsbe- und -entladeanlagen haben gemeinsam ein fahrbares Portal mit einer horizontalen Brückenplattform und einen einseitig heb- und senkbaren Auslegerarm, der an dem Portal angelenkt ist und der an seinem freien Ende einen Senkrechtförderer trägt, wobei die Gesamtanordnung dabei so getroffen ist, daß der Senkrechtförderer bei jeder Schwenkstellung des Auslegerarmes eine lotrechte Stellung einnimmt. Dieser Senkrechtförderer arbeitet mit einem Transportgutzuführ- oder -ableitband zusammen, welches an dem höhenverschwenkbaren Auslegerarm angeordnet ist, so daß auf dem Transportgutzuführ- oder -ableitband ankommendes Transportgut an den Senkrechtförderer abgegeben oder von dem Senkrechtförderer an das Transportgutzuführ- oder -ableitband abgegeben wird, wenn Transportgut entladen wird. Das in dem Auslegerarm angeordnete und mit dem Senkrechtförderer zusammenarbeitende Transportgutzuführ- oder -ableitband erstreckt sich dabei über die gesamte Länge des Auslegerarmes . Portalseitig sind für die Zuführung oder die Ableitung von Transportgut dem Transportgutzuführ- oder -ableitband weitere Transportbänder zugeordnet. Ist darüber hinaus der Auslegerarm mit dem Transportgutzuführ- oder -ableitband an dem Portal der Be-und Entladevorrichtung längsverfahrbar ausgebildet, dann ist für die Überbrückung des Zwischenraumes zwischen dem Transportgutzuführ- oder -ableitband und dem diesem zugeordneten Zuführband ein weiteres Transportband angeordnet, welches jedoch nicht in der Transportebene des Transportgutzuführ- oder -ableitbandes und des diesem vorgeschalteten Zuführbandes liegend , sondern gegenüber der Ebene des Transportgutzuführ- oder -ableitbandes und seines Zuführbandes in einer tiefer gelegenen Ebene angeordnet ist, wobei dann an den diesem Transportband zugekehrten Umlaufbereichen des Transportgutzuführ- oder -ableitbandes und des ihm zugeordneten Zuführbandes Überleitrollen vorgesehen sind, damit das Transportgut die durch die versetzte Anordnung der Transportbänder gegebenen Höhenunterschiede überwinden kann. Derartige Be- und Entladeeinrichtungen sind jedoch ausschließlich geeignet für den Transport von Säcken und von Stückgütern, jedoch nicht für beladene Paletten, da , um ein Verschieben der Palettenladung zu vermeiden, beladene Paletten nur immer in einer waagerechten oder senkrechten Ebene transportiert werden können.

Die Erfindung löst die Aufgabe, eine Vorrichtung zum Be- und Entladen von Schiffen mit beladenen Paletten zu schaffen, mit der ein Transport von beladenen Paletten in dem ein- und ausfahrbaren Auslegerarm der Vorrichtung in einer Transportebene mit stufenlosen Übergängen in jeder Ausfahrstellung des Auslegerarmes bei gleichzeitiger Anpassung der Transportbahn an die Länge des jeweils durch das Ein- und Ausfahren des verschieblichen Teils des Auslegerarmes gegebenen Verschiebeweges gewährleistet ist, ohne daß bei dem Transport der beladenen Paletten die Palettenladung verschoben wird.

Diese Aufgabe wird durch die im Patentanspruch 1 gekennzeichneten Merkmale gelöst.

Mit einer derart ausgebildeten Vorrichtung ist das Be- oder Entladen von Schiffen mit beladenen Paletten möglich. Die beladenen Paletten werden vermittels des mit der Hubbühne versehenen und in den Schiffsraum senkrecht eingefahrenen Senkrechtförderers dem Schiffsraum entnommen oder zugeführt und von dem Senkrechtförderer auf das Transportgutzuführ- oder -ableitband des Auslegerarmes abgegeben oder von diesem aufgenommen, je nachdem, ob beladen oder entladen wird. Dabei werden nach Übernahme der beladenen Paletten von dem Transportgutzuführ- oder -ableitband die Paletten auf einer ebenen Transportbahn einem weiteren kaiartig vorgesehenen Senkrechtförderer zugeführt, wobei während des Transportes die beladenen Paletten vor der Übergabe an den kaiseitig angeordneten Senkrechtförderer in keiner Weise aus der in einer Ebene liegenden Transportbahn herausbewegt werden, die von den drei Transportbändern gebildet wird, von denen das eine Transportband an den Ausfahr-und Einfahrbewegungen des schiffsseitigen Traggestells teilnimmt, während das zweite Transportband fest in dem an dem Tragarm des Auslegerarmes angeordneten Traggestell angeordnet ist. Der durch das Ein-oder Ausfahren des verfahrbaren Traggestells entstehende Zwischenraum zu dem Transportband an dem feststehenden Tragrahmen wird überbrückt durch das zwischen den beiden Transportbändern verfahrbare dritte Transportband, welches Abmessungen aufweist,die mindestens den Abmessungen einer Palette entsprechen, wobei jedoch das Transportband eine Länge und/oder Breite aufweisen kann, die dem Mehrfachen der Grundfläche einer Palette entspricht, so daß die Belade-und Entlade-Kapazität der Vorrichtung erhöht werden kann, wenn z.B. die Zuführung von jeweils zwei zusammengefaßten beladenen Paletten zu dem verfahrbaren Transportband erfolgt oder wenn alle Transportbänder eine Breite aufweisen, die das gleichzeitige Zuführen z.B. zweier nebeneinander stehender beladener Paletten zuläßt. Die Geschwindigkeit, mit der das verfahrbare Transportband zwischen den beiden Transportbändern des ein- und ausfahrbaren Traggestells und des feststehenden Traggestells verfahren wird, richtet sich jeweils nach dem Abstand des ein- und ausfahrbaren Transportbandes zu dem feststehenden Transportband, wobei dieser Abstand jeweils bestimmt wird durch die Ausfahrlänge des ein- und ausfahrbaren Traggestells aus dem feststehenden Traggestell an dem Tragarm. Das ein- und ausfahrbare Traggestell mit seinem Transportband ist in das feststehende Traggestell an dem Tragarm soweit einfahrbar, daß das verfahrbare Transportband ohne Zwischenräume zwischen dem ein- und ausfahrbaren Transportband und dem feststehenden Transportband angeordnet ist, so daß dann alle Transportbänder gleiche Umlaufgeschwindigkeiten aufweisen, wobei die Umlaufgeschwindigkeiten auch relativ hoch sein können,jedoch nur so hoch sein sollten,daß aufgrund der bei der Vorwärtsbewegung der beladenen Paletten entstehenden Fliehkräfte kein Verrutschen der Palettenladung erfolgt. Ist das ein- und ausfahrbare Traggestell mit seinem Transportband aus dem feststehenden Traggestell ausgezogen, dann ist die Verfahrgeschwindigkeit des verfahrbaren Transportbandes auf die Länge des Abstandes zwischen den beiden Transportbändern ausgerichtet, so daß auch auf diese Weise hohe Arbeitsgeschwindigkeiten erzielt werden können.

Der wesentliche Vorteil bei dieser Be- und Entladevorrichtung besteht darin, daß nicht nur mit feststehenden Stückgütern beladene Paletten , sondern auch mit Sackstapeln beladene Paletten mit gleich gutem Erfolg transportiert werden können, ohne daß es zu Verschiebungen der Palettenladungen auf den Paletten kommen kann, da für das Beladen und Entladen die beladenen Paletten nur senkrechte und waagerechte Fahrbewegungen durchgeführt werden,wobei zwischen den verschiedenen Transportbändern in dem Auslegerarm der Vorrichtung alle Übergänge stufenlos ausgebildet sind.

Vorteilhafte Ausgestaltungen der Erfindung sind in den Unteransprüchen gekennzeichnet.

Im folgenden wird der Gegenstand der Erfindung in den Zeichnungen erläutert. Es zeigt

Fig. 1 in einer Seitenansicht eine Schiffsbe- und -entladevorrichtung mit einem Senkrechtförderer und einem Transportgutzuführ- oder -ableitband in dem Auslegerarm der Vorrichtung,

Fig. 2 einen Teilabschnitt der Schiffsbe- und -entladevorrichtung mit dem aus drei Transportbändern bestehenden Transportgutzuführ- oder -ableitband,

Fig. 3 in einer vergrößerten Seitenansicht den Senkrechtförderer mit seiner bodenseitigen Transportgutaufnahmeoder -abgabeeinrichtung,

Fig. 4 in einer vergrößerten Seitenansicht die beiden teleskopierbar ausgebildeten Transportbahnen und

Fig. 5 in einer vergrößerten Seitenansicht, die im Bereich der rückwärtigen Transportbahn angeordnete Palettenhubeinrichtung.

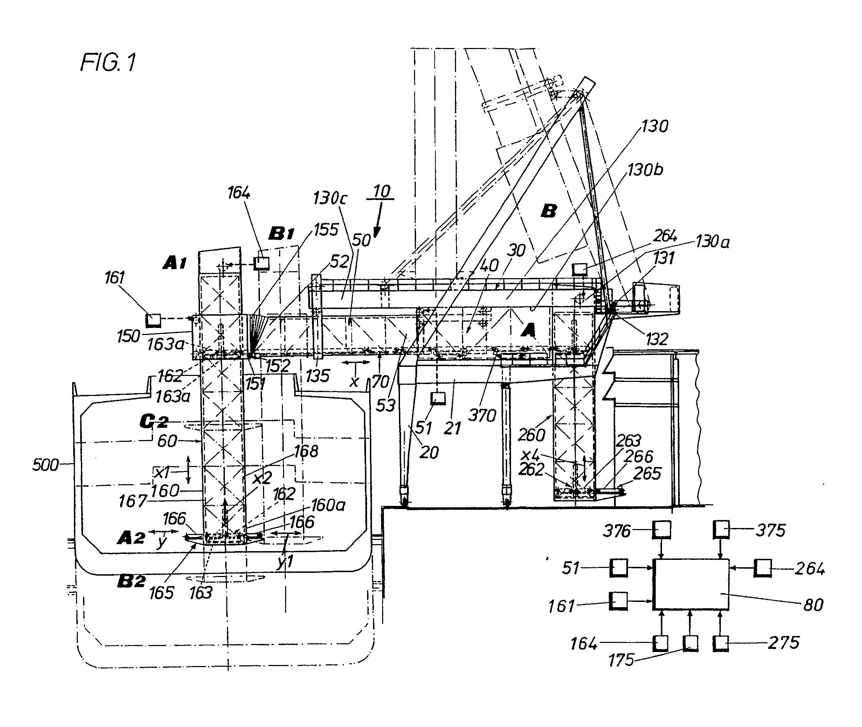

Die in Fig. 1 dargestellte Schiffsbe- und -entladevorrichtung 10 besteht aus einem verfahrbaren Portal 20 mit einer horizontalen Brückenplattform 21, die einen einseitig heb- und senkbaren Auslegerarm 30 trägt, der aus einem Tragarm 130 besteht, der mit seinem Ende 130a im rückwärtigen Bereich des Portales 20 an diesem oder an der Brückenplattform 21 bei 131 angelenkt und vermittels einer in der Zeichnung nicht dargestellten Antriebseinrichtung um eine waagerechte Schwenkachse 132 höhenverschwenkbar ist. An der Unterseite 130b des Tragarmes 130 ist ein vorzugsweise kastenartiges Traggestell 40 angeordnet, das mit dem Tragarm 130 fest verbunden ist. Dieses Traggestell 40 weist vorzugsweise eine Länge auf, die gegenüber der Länge des Tragarmes 130 kürzer bemessen ist. Des weiteren ist das Traggestell 40 im rückwärtigen Bereich des Tragarmes 130 , d.h. benachbart zum Anlenkungspunkt 131 des Tragarmes 130, an dem Portal 20 bzw. der Brückenplattform 21 angeordnet. Dieses Traggestell 40 besteht aus einer Rahmenkonstruktion, die auch allseitig mit einer Seitenverkleidung zum Schutz des Transportgutes gegen Feuchtigkeit, Regen od.dgl. versehen sein kann.

Dieses Traggestell 40 an dem Tragarm 130 dient zur Aufnahme, Halterung und Führung eines weiteren, vorzugsweise kastenförmigen, Traggestells 50, welches in Pfeilrichtung X aus dem Traggestell 40 herausfahrbar oder in das Traggestell 40 einfahrbar ist. Hierzu weist das Traggestell 40 in der Zeichnung nicht dargestellte Führungsschienen oder andersartig ausgebildete Führungen auf, während das Traggestell 50 mit entsprechenden Bauelementen versehen ist, die ein Verfahren des Traggestells 50 auf den Führungsschienen des Traggestells 40 ermöglichen. Auch dieses Traggestell 50 ist mit einer Seitenverkleidung zum Schutz des Transportgutes gegen Feuchtigkeit, Regen od.dgl. versehen. Das Verfahren des Traggestells 50 erfolgt mittels einer bei 51 angedeuteten, vorzugsweise elektromotorisch ausgebildeten,Antriebseinrichtung , die jedoch auch andersartig ausgebildet sein kann, wie in gleicher Weise alle weiteren , in der Gesamtvorrichtung 10 noch verwendeten Antriebseinrichtungen. Um eine sichere Führung des ein- und ausfahrbaren Traggestells 50 zu gewährleisten, weist der Tragarm 130 an seinem vorderen Ende 130c eine nach unten gerichtete Führungshalterung 135 auf, die z.B. als U-förmiger Bügel ausgebildet sein kann und die den Außenumfang des Traggestells 50 umgreift und mit Führungselementen , wie z.B. Führungsrollen od.dgl., versehen ist, so daß ein müheloses Verfahren des Traggestells 50 in Pfeilrichtung X möglich ist.

Bei dem in Fig. 1 gezeigten Ausführungsbeispiel trägt das Traggestell 50 an seinem vorderen freien Ende 52 einen Tragrahmen 150, der bei 151 an der Unterseite des Traggestells 50 angelenkt ist und der um eine waagerechte Schwenkachse 152 verschwenkbar ist. Dieser Tragrahmen 150 dient zur Aufnahme eines Senkrechtförderers 60, worauf nachstehend noch näher eingegangen wird.

Da der Auslegerarm 30 der Schiffsbe- und -entladevorrichtung 10 aus dem Tragarm 130 , dem fest mit diesem verbundenen Traggestell 40 und dem ein-und ausfahrbaren Traggestell 50 besteht, nehmen der Tragarm 130 und die beiden Traggestelle 40,50 an jeder Höhenverschwenkbarkeit des Auslegerarmes 30 bzw. des Tragarmes 130 teil, wie dies in Fig. 1 durch die Stellungen A und B aufgezeigt ist. Damit der an dem vorderen freien Ende 52 des Traggestells 50 angelenkte Senkrechtförderer 60 in jeder Schwenkstellung des Auslegerarmes 30 eine senkrechte Stellung einnimmt, ist der Senkrechtförderer 60 an dem Traggestell 50 angelenkt, was bei dem in Fig. 1 dargestellten Ausführungsbeispiel vermittels des Tragrahmens 150 erfolgt, der bei 151 an dem Traggestell 50 angelenkt ist. Der Übergangsbereich zwischen dem Tragrahmen 150 und dem Traggestell 50 ist durch einen Faltenbalg 155 zum Schutz gegen Feuchtigkeit, Regen od.dgl. verschlossen, wobei sich dieser Faltenbalg 155 allen Winkelstellungen des Senkrechtförderers 60 zum Auslegerarm 30 anpaßt. Der den Senkrechtförderer 60 aufnehmende Tragrahmen 150 ist wie auch die Traggestelle 40,50 mit einer Seitenverkleidung versehen. Die Gesamtanordnung ist dabei so getroffen, daß der Senkrechtförderer 60 bei jeder Schwenkstellung des Auslegerarmes 30 eine senkrechte Stellung einnimmt, was z.B. mittels in der Zeichnung nicht dargestellter Parallelführungen oder mittels hydraulischer oder pneumatischer oder andersartig betriebener Arbeitszylinder erzielt wird. Es besteht jedoch auch die Möglichkeit, die Schwenkachse 152 mit einem Antrieb zu versehen, so daß durch das Verschwenken der Schwenkachse 152 das Verschwenken des Tragrahmens 150 gesteuert wird, damit der Senkrechtförderer 60 in jeder Schwenkstellung des Auslegerarmes 30 eine senkrechte Stellung einnimmt, wobei dann in diesem Falle der Tragrahmen 150 mit der Schwenkachse 152 derart verbunden ist, daß bei einem Verdrehen der Schwenkachse 152 um ihre Längsachse auch der Tragrahmen 150 mit verschwenkt wird; es besteht jedoch auch die Möglichkeit, andersartig ausgebildete Antriebseinrichtungen zu verwenden.Das Heben und Senken des Auslegerarmes 30 erfolgt mittels eines Seilzuges od.dgl..

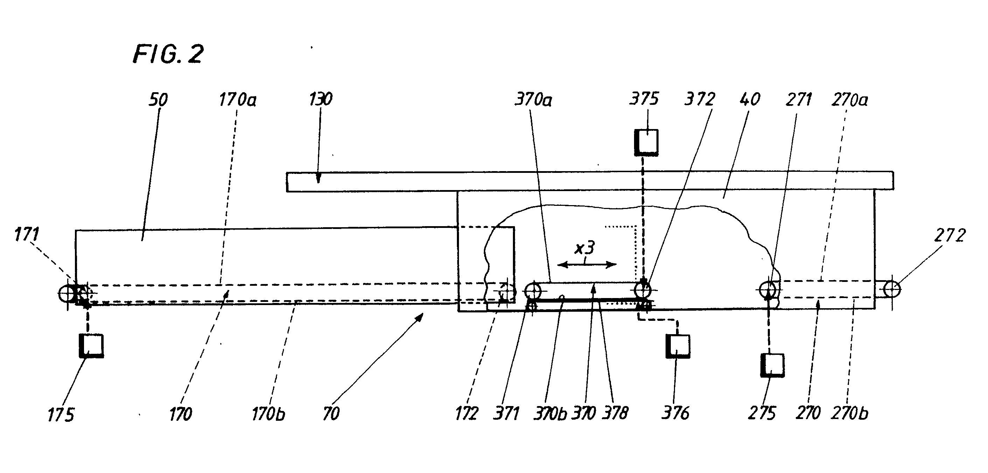

In den Innenräumen des Traggestells 40 und des Traggstells 50 ist ein Transportgutzuführ- oder -ableitband 70 angeordnet, auf das nachstehend noch näher eingegangen wird (Fig.2).

Bei dem in Fig. 1 gezeigten Ausführungsbeispiel der Schiffsbe- und -entladevorrichtung 10 besteht der Senkrechtförderer 60 aus einem rahmenartigen Traggestell 160 aus z.B. vier Längsholmen, die sich zu einer quadratischen oder rechteckförmigen Querschnittsfläche ergänzen und die über Kreuzverstrebungen miteinander verbunden sind. Von diesen vier Längsholmen sind in Fig. 1 nur die beiden Längsholme 167,168 sichtbar dargestellt. Auch dieses Traggestell 160 kann zusätzlich mit einer Seitenverkleidung zum Schutz des Transportgutes versehen sein. Dieses Traggestell 160 ist in dem Tragrahmen 150 derart gehalten und geführt, daß das Traggestell 160 in Pfeilrichtung X1 in senkrechter Richtung höhenverfahrbar ist, um das Traggestell 160 in den Laderaum eines bei 500 angedeuteten Schiffes einfahren zu können. Die Gesamtlänge des Traggestells 160 ist in etwa so bemessen, daß im abgesenkten Zustand das bodenseitige Ende 160a des Traggestells 160 oberhalb der Ladefläche oder des Schiffsbodens zu liegen kommt. Durch diese senkrechte Verfahrbarkeit des Traggestells 160 ist eine Anpassung an die jeweiligen Laderäume eines Schiffes und an dessen Tiefgang möglich.

Das senkrechte Verfahren des Traggestells 160 erfolgt mittels einer bei 161 in Fig. 1 angedeuteten ,vorzugsweise elektromotorisch angetriebenen, Antriebseinrichtung , wobei jedoch auch andersartig ausgebildete Antriebseinrichtungen zur Anwendung gelangen können. Diese Antriebseinrichtung 161 besteht vorzugsweise aus einem elektrischen Antriebsmotor und entsprechend ausgebildeten Seilzügen , über die die Verfahrbewegungen des Traggestells 160 in Pfeilrichtung X1 durchgeführt und gesteuert werden. Vorzugsweise ist dabei die Antriebseinrichtung 161 in den Tragrahmen 150 integriert. So besteht z.B. die Möglichkeit, die das Traggestell 160 bildenden vier Längsholme 167,168 außenseitig mit zahnstangenförmigen Elementen zu versehen, in die am Tragrahmen 150 vorgesehene Antriebsritzel eingreifen, die über die Antriebseinrichtung 161 angetrieben sind. Jedoch auch andersartig ausgebildete Antriebseinrichtungen können hier zur Anwendung gelangen.

Das Traggestell 160 nimmt in seinem Innenraum eine Hubbühne 162 mit einer Transportplattform 163 auf. Diese Hubbühne 162 ist mittels einer bei 164 angedeuteten Antriebseinrichtung in Pfeilrichtung X2 in dem Innenraum des Traggestells 160 verfahrbar, wobei diese Antriebseinrichtung 164 aus einem Antriebsmotor und einem , vermittels dieses Antriebsmotors angetriebenen Seilzuges besteht. Die Transportplattform 163 der Hubbühne 162 wird gebildet von mindestens einem umlaufend antreibbaren Transportband, wobei jedoch auch, wie in Fig. 1 gezeigt, die Transportplattform 163 von zwei Transportbändern 163a,163b gebildet werden kann. Jedes dieser Transportbänder besteht aus einem über Umlenkrollen geführten und angetriebenen Band. Die Umlaufrichtung dieser Transportbänder 163a,163b ist wechselbar, und zwar in Anpassung daran, ob eine Beladung oder eine Entladung vorgenommen wird. Anstelle eines Transportbandes oder anstelle von zwei Transportbändern 163a,163b kann die Transportplattform 163 auch von umlaufend antreibbaren Transportrollen gebildet sein.

An seinem bodenseitigen Ende 160a trägt das Traggestell 160 eine Transportgutaufnahme- oder -abgabeeinrichtung 165, die in an sich bekannter Weise ausgebildet ist und aus einem oder mehreren Transportbändern, wie in Fig. 1 dargestellt, oder aus Rollenbahnen mit angetriebenen Rollen besteht, wobei diese Transportgutaufnahme- oder -abgabeeinrichtung 165 so ausgebildet ist, daß zu beiden Seiten des Traggestells 160 je eine Transportbahn 166 ausgebildet ist, über die dann die beladenen Paletten auf die auf die Höhe der Transportbahn 166 abgesenkte Hubbühne 162 übergeleitet werden können. Da die beiden Transportbahnen 166 für die seitliche Zuführung der beladenen Paletten aus umlaufend angetriebenen Bändern bestehen und da die Transportplattform 163 ebenfalls aus umlaufend angetriebenen Bändern besteht, ist ein stufenloser Übergang der beladenen Paletten von den Transportbahnen 166 auf die Transportbahn 166 bzw.auf die Transportplattform 163 der Hubbühne 162 gewährleistet. Die Aufgabe oder die Abgabe von beladenen Paletten auf die Transportbahnen bzw. von den Transportbahnen 166 ist in Fig. 1 durch die Pfeile Y und Y1 angedeutet.

Das Transportgutzuführ- oder -ableitband 70 besteht , wie in Fig. 1 und 2 dargestellt, aus drei Transportbahnen 170,270,370, die bei dem in Fig. 1 dargestellten Ausführungsbeispiel als Transportbänder ausgebildet sind, wobei jedoch auch andersartig ausgebildete Förder- und Transportmittel für die Palettenladungen eingesetzt werden können. Das Transportband 170 ist in dem Innenraum des ein- und ausfahrbaren Traggestells 50 angeordnet und nimmt somit an den Einfahr- und Ausfahr-Bewegungen des Traggestells 50 teil. Dieses Transportband 170 besteht aus einem über Umlenkrollen 171,172 geführten, endlosen Band, wobei eine der beiden Umlenkrollen 171,172 angetrieben ist. Eine entsprechende Antriebseinrichtung ist bei 175 angedeutet.

Der obere Trum des Transportbandes 170 ist bei 170a und der untere Trum bei 170b angedeutet. Dieses Transportband 170 weist eine Länge auf, die in etwa der Länge des Traggestells 50 entspricht, so daß , wenn das Traggestell 50 mit einem Abschnitt in das feststehende Traggestell 40 eingefahren ist, dann auch das Transportband 170 mit dem entsprechend gleich bemessenen Abschnitt in dem Traggestell 40 zu liegen kommt. Das Transportband 170 endet am vorderen freien Ende 52 des Traggestells 50 derart, daß, wenn die Hubbühne 162 in die Höhe des Transportbandes 170 verfahren ist, dann die Transportplattform 163 der Hubbühne 162 im Bereich des oberen Trums 170a des Transportbandes 170 zu liegen kommt, so daß ein stufenloser Übergang zwischen der Transportplattform 163 der Hubbühne 162 und dem Transportband 170 gewährleistet ist.

Das Transportband 270 ist in dem feststehenden Traggestell 40 angeordnet, wobei dieses Transportband 270 eine Länge aufweist, die gegenüber der Länge des Traggestells 40 geringer ist, d.h. die Länge des Transportbandes 270 ist gegenüber der Länge des Traggestells 40 um denjenigen Bereich geringer bemessen, der durch den in das Traggestell 40 eingefahrenen Abschnitt des Traggestells 50 , wenn dieses in das Traggestell 40 eingefahren ist, bestimmt ist. Das rückwärtige Ende 53 des ein- und ausfahrbaren Traggestells 50 endet somit unter Ausbildung eines Zwischenraumes vor dem feststehenden Transportband 270 in dem feststehenden Traggestell 40, welches an dem Tragarm 130 befestigt ist. Und in diesem Zwischenraum zwischen dem Transportband 170 und dem Transportband 270 ist das Transportband 370 angeordnet. Dieses Transportband 370 weist Abmessungen auf, die es ermöglichen, eine einzige beladene Palette aufzunehmen, d.h. die Länge dieses Transportbandes 370 entspricht in etwa der Länge oder der Breite einer Palette. Ist das Traggestell 50 bis zu seinem Anschlag in das Traggestell 40 eingefahren, dann schließt sich unmittelbar an das Ende des Transportbandes 170 das Transportband 370 an, an das sich dann wiederum das Transportband 270 anschließt, so daß eine durchgehende, in einer Ebene liegende Transportbahn für das Transportgut erhalten wird. Wird dagegen das Traggestell 50 aus dem Traggestell 40 herausgezogen, dann entsteht zwischen den beiden Transportbändern 170,270 ein Zwischenraum, der größer ist als die Länge des Transportbandes 370. Um über diesen Zwischenraum einen kontinuierlichen Transport des Transportgutes zu gewährleisten, ist das Transportband 370 zwischen den beiden Transportbändern 170,270 in Pfeilrichtung X3 verfahrbar. Das Transportband 370 selbst besteht aus einem endlosen, über Umlenkrollen 371,372 geführten Band, von denen eine der beiden Umlenkrollen angetrieben ausgebildet ist. Eine entsprechend ausgebildete Antriebseinrichtung ist bei 375 angedeutet. Mit 370a ist der obere Trum und mit 370b der untere Trum des Transportbandes 370 bezeichnet. Dieses Transportband 370 ist auf einem Schlitten 378 angeordnet, der auf in der Zeichnung nicht dargestellten Führungsschienen in Pfeilrichtung X3 verfahrbar ist. Für diese Verfahrbarkeit ist eine Antriebseinrichtung 376 vorgesehen, die umsteuerbar ist, damit der Schlitten 378 mit seinem Transportband 370 sowohl in die eine Richtung als auch in die andere Richtung verfahren werden kann.

Das Transportband 270 , welches in dem Innenraum des feststehenden Traggestells 40 angeordnet ist, besteht ebenfalls aus einem endlosen, über Umlenkrollen 271,272 geführten Band, wobei eine der beiden Umlenkrollen angetrieben ist. Eine entsprechende Antriebseinrichtung ist mit 275 bezeichnet. Der obere Trum des Transportbandes 270 ist bei 270a und sein unterer Trum bei 270b angedeutet.

Im bodenseitigen Bereich und im Bereich seines dem Transportband 370 zugekehrten Endes ist das Traggestell 50 offen ausgebildet, um ein Einfahren des Transportbandes 370 bis in den Bereich des Transportbandes 170 zu gewährleisten. Die Gesamtanordnung der Transportbänder 170,270,370 ist derart, daß ihre oberen Trume 170a,270a,370a in einer Ebene liegen und somit stufenlose Übergänge geschaffen werden. Das Ein- und Ausfahren des Traggestells 50 ist in Fig. 1 durch die Stellungen A1 und B1 angedeutet. Die Höhenverfahrbarkeit des Senkrechtförderers 60 ist durch die Stellungen A2,B2 und C2 angedeutet.

Die Antriebseinrichtungen 164,175,275,375,376 für die Hubbühne 162 , für das zusammen mit dem Traggestell 160 ein- und ausfahrbaren Transportband 170 , für das Transportband 270 in dem feststehenden Traggestell 40 und für das verfahrbare Transportband 370 sind in einem Steuerwerk 80 derart zusammengeführt, daß, wenn ein Transportgut das dem Senkrechtförderer 60 abgekehrte Ende des Transportbandes 170 erreicht hat, dann das verfahrbare Transportband 370 in die Übernahmeposition an das Transportband 170 verfahren worden ist. Bei Inbetriebnahme der Transportbänder wird dann das Transportgut von dem Transportband 170 auf das Transportband 370 übergeleitet. Ist das verfahrbare Transportband 370 ohne Zwischenraum zwischen den beiden Transportbändern 170,270 angeordnet, dann erfolgt ein direktes Überleiten des Transportgutes von dem Transportband 170 auf das Transportband 370 und von diesem auf das Transportband 270. Ist dagegen das Traggestell 50 mit seinem Transportband 170 aus dem Traggestell 40 ausgefahren, dann wird das Transportband 370 nach Übernahme eines Transportgutes von dem Transportband 170 bis in den Aufnahmebereich des Transportbandes 270 verfahren; das Transportgut wird dann von dem Transportband 370 auf das Transportband 270 abgegeben, wobei während des Verfahrens des Transportbandes 370 der Umlauf des Bandes außer Betrieb gesetzt ist, da während des Verfahrens ein Transport des Transportgutes auf dem Transportband 370 selbst nicht erfolgen darf. Erst wenn das Transportband 370 entweder an das Transportband 170 oder an das Transportband 270 herangefahren ist, wird das Band des Transportbandes 370 in Umlauf gesetzt, so daß eine Übernahme von Transportgut von dem Transportband 170 auf das Transportband 370 oder eine Abgabe von Transportgut von dem Transportband 370 auf das Transportband 270 erfolgen kann, wobei die Umlaufrichtung der Transportbänder 170,270,370 sich jeweils danach richtet, ob ein Schiff 500 beladen oder entladen soll.

Die Umlaufgeschwindigkeiten aller drei Transportbänder 170,270,370 können gleich sein, während sich die Verfahrgeschwindigkeit des Transportbandes 370 jeweils nach der Länge der zu überwindenden Fahrstrecke, d.h. nach der Länge des Zwischenraumes zwischen dem Transportband 170 und dem Transportband 270 richtet. Ist dieser Abstand zwischen dem Transportband 170 und dem Transportband 270 gering, dann ist für das Verfahren des Transportbandes 370 keine große Geschwindigkeit erforderlich; ist dagegen der Abstand zwischen dem Transportband 170 und dem Transportband 270 groß, dann ist es von Vorteil, wenn das Transportband 370 mit erhöhter Geschwindigkeit verfahren wird, um eine hohe Entlade- oder Beladeleistung zu erreichen, wobei die Verfahrgeschwindigkeit des Transportbandes 370 jedoch so bemessen sein muß, daß ein Verschieben der Palettenladung auf der Palette vermieden wird.

Über das Steuerwerk 80 und die Antriebseinrichtungen für die Transportbänder 170,270,370 werden die Umlaufgeschwindigkeiten und die Verfahrgeschwindigkeit des Transportbandes 370, und zwar jeweils in Abhängigkeit von dem durchzuführenden Fahrweg des verfahrbaren Transportbandes 370 und den Fahrbewegungen des der Hubbühne 162 gesteuert, so daß ein kontinuierlicher Transport von der Transportgutaufnahme-oder -abgabeeinrichtung 165 über die Hubbühne 162 des Senkrechtförderers 60 und über das Transportgutzuführ- oder -ableitband 70 zur Abgabe oder Aufnahmestation erfolgt, die kaiseitig angeordnet ist.

Wie Fig. 1 zeigt, ist am rückwärtigen Ende 130a des Tragarmes 130 ein senkrechtes Traggestell 260 angeordnet, welches entsprechend dem Traggestell 160 ausgebildet sein kann. In diesem Traggestell 260 ist eine Hubbühne 262 mit einer Transportplattform 263 angeordnet. Das senkrechte Verfahren der Hubbühne 262 in Pfeilrichtung X4 erfolgt mittels einer bei 264 angedeuteten Antriebseinrichtung, die ebenfalls mit dem Steuerwerk 80 verbunden ist. An seinem bodenseitigen Ende trägt das Traggestell 260 eine Transportgutaufnahme- oder -abgabeeinrichtung 265,die entsprechend der Transportgutaufnahme- oder -abgabeeinrichtung 165 ausgebildet ist. Die Fahrbewegungen der Hubbühne 262 in dem Traggestell 260 sind auf den Gesamtbewegungsablauf der Hubbühne 162 und der Transportbänder 170,270,370 abgestimmt, so daß über die Transportgutaufnahme- oder -abgabeeinrichtung 265 aufgegebene Transportgüter vermittels der Hubbühne 260 in den Bereich des Transportbandes 270 gefördert werden. Von dem Transportband 270 wird dann das Transportgut auf das Transportband 370 abgegeben, welches für die Übergabe des Transportgutes an das Transportband 270 herangefahren ist. Daraufhin verfährt das Transportband 370 bis zur Anlage an das Transportband 170, von dem das Transportgut übernommen und zu der Hubbühne 162 des Senkrechtförderers 60 transportiert wird. Die Hubbühne 162 übernimmt das Transportgut von dem Transportband 170, worauf dann die Hubbühne 162 bis zur Transportgutaufnahme- oder -abgabeeinrichtung 165 verfährt und von dieser dann in den Laderaum eines Schiffes 500 abgegeben wird. Auf diese Weise ist das Beladen eines Schiffes in kürzester Zeiteinheit möglich. Das Entladen eines Schiffes erfolgt in gleicher Weise , jedoch in Umkehrung der Umlaufrichtungen der Transportbänder und der Fahrbewegung des Transportbandes 370.

Der bei der Schiffsbe- und -entladevorrichtung 10 verwendete Senkrechtförderer 60 kann auch andersartig ausgebildet sein. Die Verwendung einer Hubbühne 162 ist insbesondere dann vorteilhaft, wenn beladene Paletten oder größere Stückgüter transportiert werden sollen. Andersartige Stückgüter, wie z.B. Säcke, können auch über einen Wendelförderer oder Klemmbandförderer zu dem Transportgutzuführ- oder -ableitband 70 in dem Auslegerarm 30 transportiert werden.

Es besteht jedoch auch die Möglichkeit, die Verfahrgeschwindigkeit des Transportbandes 370 von der jeweiligen Einfahrtiefe des Traggestells 50 in das Fahrgestell 40 zu steuern. Je weiter das Traggestell 50 in das Traggestell 40 eingefahren ist, desto geringer wird die Fahrgeschwindigkeit des Transportbandes 370 sein, während sich die Fahrgeschwindigkeit bei Vergrößerung der Zwischenräume zwischen den beiden Transportbändern 170,270 vergrößert.

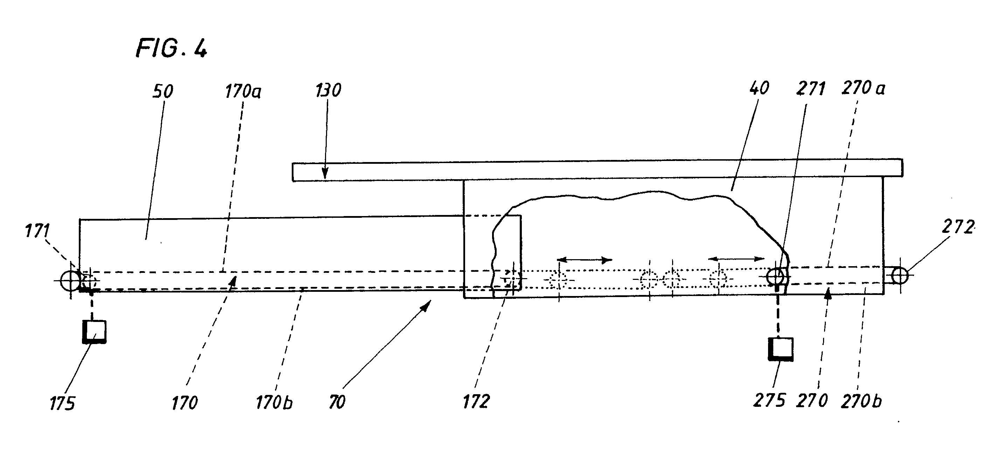

Bei der in Fig. 1 und 2 gezeigten Ausführungsform ist zur Überbrückung des Zwischenraumes zwischen den beiden Transportbändern 170,270 ein weiteres Transportband 370 angeordnet, das zwischen den beiden Transportbändern 170,270 in Abhängigkeit von der jeweils erhaltenen Länge des Zwischenraumes zwischen diesen beiden Transportbändern 170,270 verfahrbar ist. Dieser Zwischenraum ist nach einer weiteren Ausführungsform gemäß Fig. 4 auch ohne einem verfahrbaren Transportband 370 überbrückbar, indem nämlich die beiden einander zugekehrten Enden der beiden Transportbänder 170,270 teleskopierbar ausgebildet sind, so daß die beiden Transportbänder 170,270 in ihren Längen veränderlich sind. Dies wird z.B. dadurch erreicht, daß jede Transportbahn 170,270 aus zwei in einem Abstand voneinander angeordneten umlaufend angetriebenen Transportbändern, Ketten od.dgl. besteht, wobei dann zwischen den beiden Transportbändern in einem gesonderten Lagergestell ein weiteres Transportband oder zwei nebeneinanderliegend angeordnete Transportbänder angeordnet ist bzw. sind. Dieses Lagergestell ist dann in waagerechter Richtung ein- und ausfahrbar, so daß jede Länge des Zwischenraumes zwischen den beiden Transportbändern 170,270 überbrückt werden kann. Es besteht auch die Möglichkeit, nur eines der beiden Transportbänder 170 bzw. 270 teleskopierbar auszubilden.

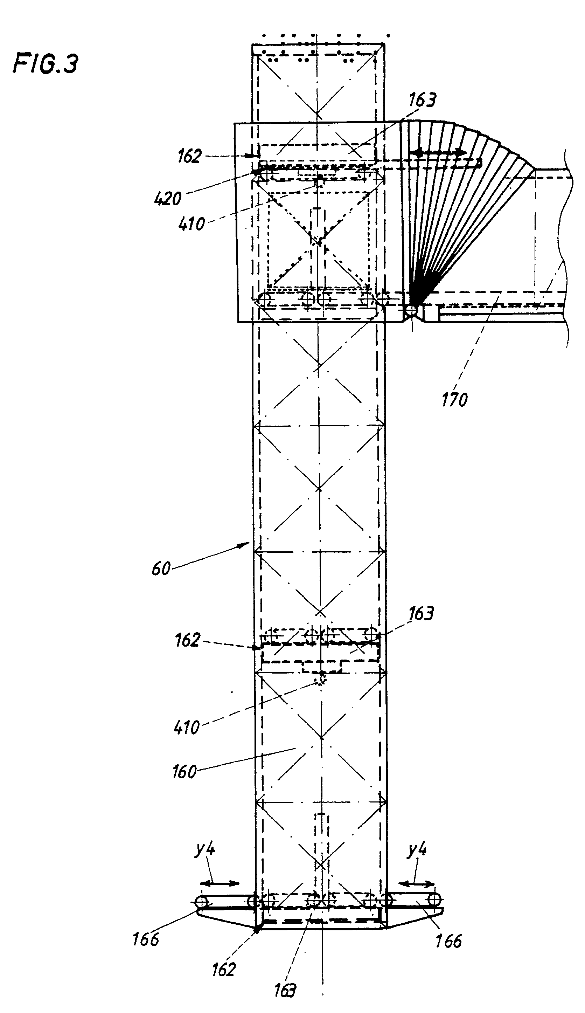

Die letzte Palettenladung wird, da ein Einsetzen mittels des Senkrechtförderers oder eines Gabelstaplers nicht mehr möglich ist, in den beladenen Laderaum eines Schiffes mittels Transportgurten (Slings) eingesetzt, wobei dann die Gurte an der Palettenladung verbleiben, um diese für das Entladen aus dem Laderaum herausnehmen zu können, so daß dann in den so geschaffenen Freiraum der Senkrechtförderer eingefahren werden kann. Für das Anbringen der Transportgurte ist dann die Transportplattform 163 der Hubbühne 162 an ihrer Unterseite mit einer Hebeeinrichtung 410 versehen, an der die Palettentransportgurte befestigbar sind. Diese Hebeeinrichtung 410 kann z.B. aus einem Haken oder einer Seilwinde mit Seil und Haken bestehen (Fig. 3). Um die mittels der Hebeeinrichtung angehobene und durch Verfahren der Hubbühne 162 in den oberen Bereich des Senkrechtförderers 60 gebrachte Palettenladung auf das Transportband 170 abgeben zu können, ist die Transportplattform 163 der Hubbühne 162 mit einer Querfördereinrichtung 420 versehen, die aus einem Transportschlitten od.dgl. bestehen kann, der mittels in der Zeichnung nicht dargestellter Ausleger seitlich aus den Senkrechtförderer 60 herausgefahren werden kann. Die Palettenladung wird dann über das Transportband 170 verfahren und auf dieses abgesenkt (Fig. 3). Der Ausleger ist bei Nichtgebrauch unter oder in die Transportplattform 163 einfahrbar.

Die an dem bodenseitigen Ende 160a des Traggestells 160 angeordnete Transportgutaufnahme- oder -abgabeeinrichtung 165 besteht aus einer seitlich auskragenden Transportbahn 166 oder aus zwei zu beiden Seiten des Traggestells 160 angeordneten waagerechten Transportbahnen 166, die fest an dem Traggestell 160 oder in Richtung der Pfeile Y4 in waagerechter Richtung ein- und ausfahrbar sind. Im eingefahrenen Zustand liegen die beiden Transportbahnen 166 in dem Traggestell 160 und nehmen dann eine Fläche in Anspruch, die der Fläche der Transportplattform 163 der Hubbühne 162 entspricht (Fig. 3). Dieses Ein- und Ausfahren der Transportbahnen 166 hat den Vorteil, daß wenn die Transportbahnen 166 in das Traggestell 160 eingefahren sind, dann der Senkrechtförderer 60 kleinste Querschnittsflächenabmessungen aufweist, also Abmessungen, die in etwa den Abmessungen einer Palettenfläche entsprechen, so daß der Senkrechtförderer 60 auch in den Freiraum von mehreren nebeneinander angeordneten Palettenladungen einfahrbar ist, der durch Herausnahme einer Palettenladung aus dem gesamten Palettenladungsverband geschaffen wird.

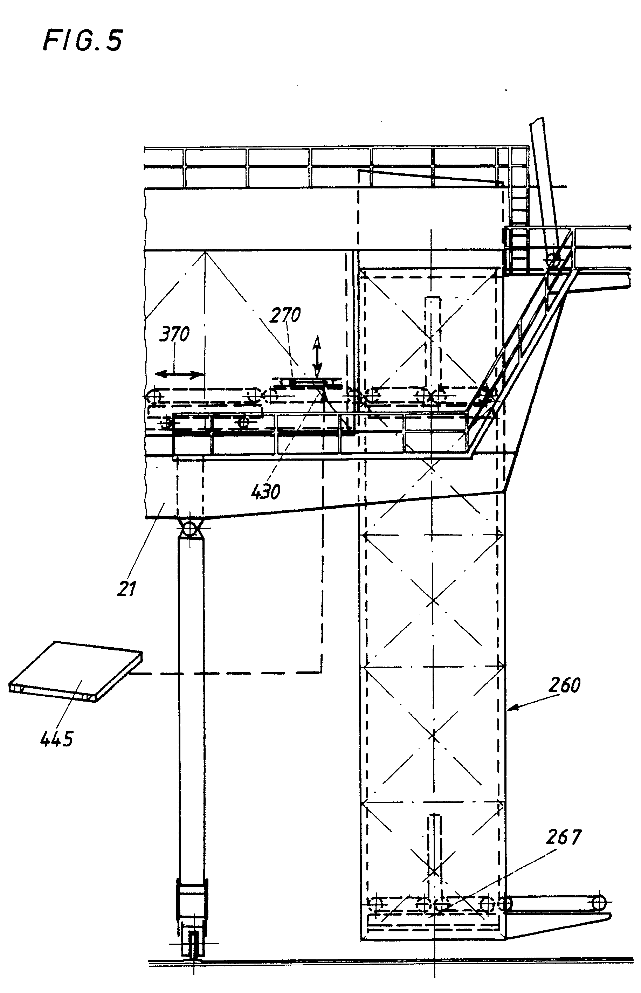

Im Bereich der Transportbahn 270 ist eine Palettenhubeinrichtung 430 angeordnet, mit der die auf dieser Transportbahn 270 ankommenden, mit Transportgut beladenen Paletten angehoben und auch abgesenkt werden können. Dieses Anheben dient zur Schaffung eines Zwischenraumes oberhalb der Transportbahn 270, so daß in diesen Zwischenraum Terminalpaletten 445 einführbar sind, um die beladenen Paletten auf diesen Terminalpaletten 445 absetzen zu können. Da Paletten verschiedenartige Ausgestaltungen aufweisen und auch beschädigt sein können, so daß keine einwandfreie Palettenstandfläche erhalten wird, werden sogenannte Terminalpaletten verwendet, die plattenförmig ausgebildet sind, eine geringe Höhe aufweisen und darüber hinaus so ausgebildet sind, daß sie von der Gabel eines Gabelstaplers erfaßt, angehoben oder abgesenkt werden können. Paletten mit Ladungen, die auf solchen Terminalpaletten abgesetzt sind, lassen sich auch dann einwandfrei stapeln und zu Stapeln zusammensetzen, wenn die Paletten, auf denen die Ladungen angeordnet sind, Beschädigungen aufweisen. Diese Palettenhubeinrichtung 430 besteht z.B. aus unter die beladene und auf der Transportbahn ankommende Palette fahrbare Gabel entsprechend der eines Gabelstaplers und einer hydraulischen Hebeeinrichtung, wobei jedoch auch andersartig ausgebildete Hubeinrichtungen zur Anwendung gelangen können. Vorteilhafterweise ist die Hubeinrichtung 430 am Ende der Transportbahn 270, also an dem dem Traggestell 260 mit der Hubbühne 262 zugekehrten Ende, angeordnet. Die Entnahme der Terminalpaletten erfolgt aus einem in der Zeichnung nicht dargestellten Magazin bzw. Vorratsschacht vermittels einer Vereinzelungseinrichtung. Nach Entnahme einer Terminalpalette wird dann der gesamte Terminalpalettenstapel in dem Vorratsschacht nach oben verfahren. Die Entnahme der einzelnen Terminalpaletten erfolgt mittels eines z.B. hydraulisch angetriebenen Querschiebers. Nicht benötigte Terminalpaletten werden über eine Führungsbahn dem Vorratsschacht wieder zugeführt (Fig. 5).

**Patentansprüche**

1. Vorrichtung zum Be- und Entladen, insbesondere von Schiffen mit Stückgut, insbesondere von beladenen Paletten, bestehend aus einem Portal (20) mit einem eine Transportgutzuführoder -ableitbahn (70) aufweisenden, höhenverschwenkbaren Auslegerarm (30), der an seinem freien Ende einen Senkrechtförderer (60) trägt, der mit der Transportzuführ- oder ableitbahn (70) zusammenarbeitet und der an seinem unteren Ende eine Transportgutaufnahmeoder abgabeeinrichtung (165) trägt, wobei der Auslegerarm (30) aus einem mit seinem einen Ende (130a) an dem Portal (20) gehaltenen und um eine waagerechte Schwenkachse (132) höhenverschwenkbaren Tragarm (130) besteht, dadurch gekennzeichnet, daß der Tragarm an seiner Unterseite (130b) ein mit dem Tragarm (130) fest verbundenes Traggestell (40) trägt, das als Führungsbahn für ein in diesem Traggestell (40) gehaltenes und mittels einer Antriebseinrichtung (51) waagerecht verfahrbares weiteres Traggestell (50) ausgebildet ist, das teleskopartig aus dem feststehenden Traggestell (40) herausfahrbar oder in das feststehende Traggestell (40) einfahrbar ist und das an seinem vorderen freien Ende (52) den Senkrechtförderer (60) trägt, der aus einem in dem ein- und ausfahrbaren Traggestell (50) in dessen vorderen Endbereich mittels einer Antriebseinrichtung (161) in senkrechter Richtung verfahrbaren Traggestell (160) mit einer in diesem angeordneten und mittels einer Antriebseinrichtung (164) in senkrechter Richtung verfahrbaren Hubbühne (162) mit einer Transportplattform (163) besteht, wobei die Transportplattform (163) der Hubbühne (162) bis in den Bereich der bodenseitig an dem Traggestell (160) angeordneten Transportgutaufnahmeoder -abgabeeinrichtung (165) und in jeweiliger Abhängigkeit von der Länge des Transportbereiches bei abgesenktem Traggestell (160) in den Bereich der Transportgutzuführ- oder -ableitbahn (70) verfahrbar ist, die aus einer feststehend in dem ein- und ausfahrbaren Traggestell (50) angeordneten Transportbahn (170), einer feststehend in dem feststehenden Traggestell (40) angeordneten Transportbahn (270) und einer zwischen den beiden Transportbahnen (170, 270) angeordneten und in waagerechter Richtung mittels einer Antriebseinrichtung (376) verfahrbaren Transportbahn (370) mit mindestens einer der Länge oder der Breite einer Palette entsprechenden Länge besteht, wobei die oberen Trume (170a,270a,370a) der drei Transportbahnen (170,270,370) in einer Ebene liegen und wobei die zwischen den beiden Transportbahnen (170,270) angeordnete verfahrbare Transportbahn (370) zwischen den beiden Transportbahnen (170,270) jeweils in dem Bereich verfahrbar ist, der sich aus dem jeweiligen Abstand der Transportbahn (170) in Abhängigkeit von der Länge des Ausfahrbereiches des ein- und ausfahrbaren Traggestells (50) mit seiner Transportbahn (170) von der Transportbahn (270) in dem feststehenden Traggestell (40) ergibt, und daß die Antriebseinrichtungen (174,175,275,375,376) für die Hubbühne (162), für die Transportbahn (170) in dem ein- und ausfahrbaren Traggestell (50), für die Transportbahn (270) in dem feststehenden Traggestell (40) und für die verfahrbare Transportbahn (370) in einem Steuerwerk (80) derart zusammengeführt sind, daß für das Entladen, wenn ein Transportgut das Ende der Transportbahn (170) erreicht, die verfahrbare Transportbahn (370) in die Übernahmeposition an die Transportbahn (170) verfahren ist, nach erfolgter Übernahme des Transportgutes an die Transportbahn (270) des feststehenden Traggestells (40) verfahren wird und nach Abgabe des Transportgutes auf die Transportbahn (270), die verfahrbare Transportbahn (370) an die Transportbahn (170) des ein- und ausfahrbaren Traggestells (50) gefahren wird, und daß beim Beladen das Verfahren der verfahrbaren Transportbahn (370) bei gleichzeitiger Umkehr der Umlaufrichtungen der Transportbahnen (170,270,370) in umgekehrter Richtung erfolgt, wobei die Umlaufgeschwindigkeit der Transportbahnen (170,270,370) und die Verfahrensgeschwindigkeit der verfahrbaren Transportbahn (370) von den Fahrbewegungen und der Fahrgeschwindigkeit der Hubbühne (162) in Abhängigkeit von dem Fahrweg der verfahrbaren Transportbahn (370) steuerbar sind.

2. Vorrichtung nach Anspruch 1, dadurch gekennzeichnet, daß das Traggestell (160) für die Hubbühne (162) und die Traggestelle (40,50) für die Transportbänder (170,270,370) aus vollummantelten Rahmenkonstruktionen bestehen.

3. Vorrichtung nach Anspruch 1 und 2, dadurch gekennzeichnet, daß das Transportband (170) des ein-und ausfahrbaren Traggestells (50) bis an den Verfahrbereich der Hubbühne (162) geführt ist.

4. Vorrichtung nach Anspruch 1 bis 3, dadurch gekennzeichnet, daß das Traggestell (40) an dem Tragarm (130) eine Länge aufweist, die gegenüber der Länge des Tragarmes (130) geringer ist, und im rückwärtigen Bereich des Tragarmes (130) an diesem angeordnet ist, der an seinem vorderen, dem Senkrechtförderer (60) zugekehrten Ende eine Führungshalterung (135) für das ein- und ausfahrbare Traggestell (50) trägt.

5. Vorrichtung nach Anspruch 1 bis 4, dadurch gekennzeichnet, daß das ein- und ausfahrbare Traggestell (50) an seinem vorderen freien Ende (52) einen Tragrahmen (150) für das Traggestell (160) mit der Hubbühne (162) trägt, wobei das Traggestell (160) in diesem Tragrahmen (150) gehalten und geführt ist.

6. Vorrichtung nach Anspruch 5, dadurch gekennzeichnet, daß der Tragrahmen (150) für den Senkrechtförderer (60) an dem vorderen freien Ende (52) des ein- und ausfahrbaren Traggestells (50) angelenkt und um eine waagerechte Achse (152) höhenverschwenkbar ist.

7. Vorrichtung nach Anspruch 1 bis 6, dadurch gekennzeichnet, daß der Senkrechtförderer (60) als Wendelförderer, Klemmbandförderer od.dgl. ausgebildet ist.

8. Vorrichtung nach Anspruch 1 bis 7, dadurch gekennzeichnet, daß der Tragarm (130) an seinem rückwärtigen Ende (130a) im Anschluß an das mit dem Tragarm (130) verbundene Traggestell (40) ein senkrechtes Traggestell (260) trägt, in dem eine Hubbühne (262) mit einer Transportplattform (263) verfahrbar angeordnet ist und das an seinem bodenseitigen Ende mit einer Transportgutaufnahme-oder -abgabeeinrichtung (265) versehen ist.

9. Vorrichtung nach Anspruch 1 bis 8, dadurch gekennzeichnet, daß die Transportplattform (163;263) einer jeden Hubbühne (162;262) aus mindestens einem Transportband (166;266), dessen Umlaufrichtung parallel zu den Transportbändern (170,270,370) verlaufend ist, oder aus Rollenbahnen mit umlaufend angetriebenen Rollen besteht.

10. Vorrichtung nach Anspruch 1 bis 9, dadurch gekennzeichnet, daß alle Transportbänder (170,270,370) gleiche Umlaufgeschwindigkeiten aufweisen.

11. Vorrichtung nach Anspruch 1 bis 10, dadurch gekennzeichnet, daß die Verfahrgeschwindigkeit des verfahrbaren Transportbandes (370) den Umlaufgeschwindigkeiten der Transportbänder (170,270) entspricht.

12. Vorrichtung nach Anspruch 1 bis 10, dadurch gekennzeichnet, daß die Verfahrgeschwindigkeit des verfahrbaren Transportbandes (370) gegenüber der Umlaufgeschwindigkeit der Transportbänder (170,270) großer ist.

13. Vorrichtung nach Anspruch 1 bis 12, dadurch gekennzeichnet, daß die Umlaufgeschwindigkeit des verfahrbaren Transportbandes (370) während des Verfahrens außer Betrieb setzbar ist.

14. Vorrichtung nach Anspruch 1 und 13, dadurch gekennzeichnet, daß die Verfahrgeschwindigkeit des Transportbandes (370) in Abhängigkeit von der jeweiligen Einfahrtiefe des Traggestells (50) in das Traggestell (40) steuerbar ist.

15. Vorrichtung nach einem der vorhergehenden Ansprüche 1 bis 14, dadurch gekennzeichnet, daß anstelle der Transportbahn (370) zwischen den beiden Transportbahnen (170,270) zur Überbrückung des Zwischenraumes zwischen den beiden Transportbahnen (170,270) die beiden Transportbahnen (170,270) teleskopierbar ausgebildet sind, wobei die beiden Transportbahnen (170,270) an ihren einander zugekehrten Enden mit ein-und ausfahrbaren Bahnabschnitten versehen sind.

16. Vorrichtung nach Anspruch 1 bis 15, dadurch gekennzeichnet, daß die Transportplattform (163) der Hubbühne (162) an ihrer Unterseite mit einer Hebeeinrichtung (410) für die Befestigung von Palettentransportgurten od.dgl. versehen ist.

17. Vorrichtung nach Anspruch 16, dadurch gekennzeichnet, daß die Transportplattform (163) der Hubbühne (162) mit einer Querfördereinrichtung (420) zum Übergeben der mittels der Hebeeinrichtung (410) angehobenen Paletten an die Transportbahn (170) versehen ist.

**18.** Vorrichtung nach Anspruch 1 bis 17, dadurch gekennzeichnet, daß das Traggestell (160) an seinem bodenseitigen Ende (160a) eine Transportgutaufnahme- oder -abgabeeinrichtung (165) aufweist, die aus einer waagerechten, seitlich auskragenden Transportbahn (166) oder aus zwei zu beiden Seiten des Traggestells (160) angeordneten Transportbahnen (166) besteht, wobei die Transportbahnen (166) in waagerechter Richtung ein- und ausfahrbar und in das Traggestell (160) einfahrbar sind.

**19.** Vorrichtung nach Anspruch 1 bis 18, dadurch gekennzeichnet, daß im Bereich der Transportbahn (270) des festehend angeordneten Traggestells (40) eine Palettenhubeinrichtung (430) und eine Einrichtung (440) zum Einführen einer Terminalpalette (445) in den Zwischenraum zwischen dieser Transportbahn (270) und der angehobenen Palette mit dem Transportgut und unterhalb der Palette angeordnet ist.

## Claims

**1.** Loading and unloading device, in particular for ships carrying bulk goods, in particular for loaded pallets, comprising a gantry (20) with a vertically slewable jib (30) provided with a supply or delivery conveying path (70) for goods to be conveyed which, on its free end, supports a vertical conveyer (60) which interacts with the supply or delivery conveying path for goods to be conveyed and which, on its bottom end, carries a receiving or delivery means (165) for the goods to be conveyed, the jib (30) is comprised of a supporting arm (130) retained with one of its ends (130a) on the gantry (20) and which is vertically slewable about a horizontal swivel axis (132), characterized in that the supporting arm, on its underside (130b), is equipped with a supporting frame (40) rigidly connected to the supporting arm (130), which is constructed in the form of a guide path for a further supporting frame (50) retained in this supporting frame (40) which can be made to travel horizontally with the aid of a drive means (51), said further supporting frame (50) being capable of being made to move in a telescopable manner out of the stationary supporting frame (40) or into the stationary supporting frame (40), and which, on its forward front end (52), supports the vertical conveyer (60) which is comprised of a supporting frame (160) vertically displaceable with the aid of a drive means (161) in the inwardly and outwardly displaceable supporting frame (50) within its forward terminal area with a lifting platform (162) with a conveying platform (163) in the latter and vertically displaceable with the aid of a drive means (164), in which the conveying platform (163) of the lifting platform (162) can be made to travel as far as into the area of the receiving or delivery means (165) for the goods to be conveyed which is disposed at the bottom of the supporting frame (160) and in respective dependence upon the length of the conveying range with the supporting frame (160) in the lowered state into the area of the supply or delivery conveying path (70) for the goods to be conveyed, which comprises a conveying path (170) stationarily disposed in the inwardly and outwardly displaceable supporting frame (50), a conveying path (270) stationarily disposed in the stationary supporting frame (40), and a conveying path (370) disposed between the two conveying paths (170, 270) and horizontally displaceable with the aid of a drive means (376) and having a length that corresponds to at least the length or the width of a pallet, in which the upper running belt portions (170a,270a,370a) of the three conveying paths (170,270,370) lie in one plane and wherein the conveying path (370) disposed between the two conveying paths (170,270) can in each case be made to travel between the two transport paths (170,270) within the area which results from the respective distance of the conveying path (170) in dependence upon the length of the outward travel range of the inwardly and outwardly displaceable supporting frame (50) with its conveying path (170) from the conveying path (270) within the stationary supporting frame (40), and in that the drive means (174,175,275,375,376) of the lifting platform (162) of the conveying path (170) in the inwardly and outwardly displaceable supporting frame (50), of the conveying path (270) in the stationary supporting frame (70). as well as of the displaceable conveying path (370) are brought together in a control system (80) in such a way that, for the unloading operation, when a bulk goods item reaches the end of the conveying path (170), the displaceable conveying path (370) is made to travel into the takeover position to the conveyeing path (170) and, subsequent to the effected takeover of the bulk goods item, is made to travel to the conveying path (270) of the stationary supporting frame (40) and, following the delivery of the bulk goods item on to the conveying path (270), the displaceable conveying path (370) is made to travel to the conveying path (170) of the inwardly and outwardly displaceable supporting frame (50), and in that, in the course of the loading operation, the travel of the displaceable conveying path (370), while the rotational directions of the conveying paths (170,270,370) are simultaneously reversed, proceeds in the opposite direction, in which case the rotational speed of the conveying paths (170,270,370) and the speed of travel of the displaceable conveying path (370) are controllable by means of the travel motions and the speed of travel of the lifting platform (162) in dependence upon the path of travel of the displaceable conveying path (370).

2. Device according to Claim 1, characterized in that the supporting frame (160) of the lifting platform (162) and the supporting frames (40,50) of the conveyer belts (170,270, 370) comprise fully encased framework structures.

3. Device according to Claims 1 and 2, characterized in that the conveying path (170) of the inwardly and outwardly displaceable supporting frame (50) is brought up to the travel range of the lifting platform (162).

4. Device according to any of Claims 1 to 3, characterized in that the supporting frame (40) on the supporting arm (130) possesses a length which, in comparison with the length of the supporting arm (130), is smaller and is disposed betwithin the rearward area of the supporting arm (130) and is disposed on the same, which, on its front end facing the vertical conveyer (60), carries a guide mounting means (135) for the inwardly and outwardly displaceable supporting frame (50).

5. Device according to Claims 1 to 4, characterized in that the inwardly and outwardly displaceable supporting frame (50), on its forward free end (52, carries a supporting structure (150) for the supporting frame (160) with the lifting platform (162), the supporting frame (160) being retained and guided within this supporting structure (150).

6. Device according to Claim 5, characterized in that the supporting structure (150) of the vertical conveyer (60) is hinged on to the forward free end (52) of the inwardly and outwardly displaceable supporting frame (50) and is vertically swivellable about a horizontal axis (152).

7. Device according to Claims 1 to 6, characterized in that the vertical conveyer (60) is constructed in the form of a spiral conveyer, clamping belt conveyer or the like.

8. Device according to Claims 1 to 7, characterized in that the supporting arm (130), on its rearward end (130a), in combination with with the supporting frame (40) connected to the supporting arm (130), carries a vertical supporting frame (260) in which a lifting platform (162) with a conveying platform (263) is displaceably disposed and which, on its bottom end, is provided with a means (265) for receiving and delivering goods to be conveyed.

9. Device according to Claims 1 to 8, characterized 1 in that conveying platform (163;263) of each lifting platform (162; 262) comprises at least one conveyer belt (166;,266) whose rotational direction proceeds parallel to the conveying paths (170,270,370), or which comprises roller conveyers with rotationally driven rollers.

10. Device according to Claims 1 to 9, characterized in that all conveyer paths (170,270,370) possess identical rotational speeds.

11. Device according to Claims 1 to 10, characterized in that the speed of travel of the displaceable conveying path (370) corresponds to the rotational speeds of the conveying paths (170,270).

12. Device according to Claims 1 to 10, characterized in that the speed of travel of the displaceable conveying path (370), in comparison with the rotational speed of the conveying paths (170,270), is higher.

13. Device according to Claims 1 to 12, characterized in that the rotational speed of the displaceable conveying path (370) can be rendered inoperative while travel is in progress.

14. Device according to Claims 1 and 13, characterized in that the speed of travel of the conveying path (370) can be controlled in dependence upon the respective depth of inward travel of the supporting frame (50) into the supporting frame (40).

15. Device according to any of the preceding Claims 1 to 14, characterized in that, instead of the conveying path (370) between the two conveying paths (170,270), in order to bridge the interspace between the two conveying paths (170, 270), the two conveying paths (170,270) are constructed telescopably, while the two conveying paths (170,270), on their ends which face each other, are provided with inwardly and outwardly displaceable path sections.

**16.** Device according to Claims 1 to 16, characterized in that the conveying platform (163) of the lifting platform (162), on its underside, is provided with a lifting means (410) for the attachment of pallets, conveying straps or the like.

**17.** Device according to Claim 16, characterized in that the conveying platform (163) of the lifting platform (162) is provided with a transverse conveying means (420) for delivering the pallets raised with the aid of the lifting means (410) to the conveying path (170).

**18.** Device according to Claims 1 to 17, characterized in that the supporting frame (160) is, at its bottom end (160a), provided with a receiving or delivering means (165) for goods to be conveyed which comprises a horizontal, laterally projecting conveying path (166) or two conveying paths (166) disposed on both sides of the supporting frame (160), in which the conveying paths (166) are inwardly and outwardly displaceable in the horizontal direction and can be made to travel into the supporting frame (160).

**19.** Device according to Claims 1 to 18, characterized in that, within the area of the conveying path (270) of the stationarily disposed supporting frame 40, a pallet lifting means (430) and a means (440) for introducing a terminal pallet (445) into the interspace between this conveying path (270) and the raised pallet with the goods to be conveyed and underneath the pallet are disposed.

## Revendications

**1.** Dispositif de chargement et de déchargement, en particulier de bateaux avec des marchandises de détail, en particulier de palettes chargées, composé d'un portique (20) avec un bras en flèche (30) pivotant en hauteur et présentant une bande d'amenée ou d'évacuation des marchandises à transporter (70), bras qui porte, à son extrémité libre, un élévateur vertical (60) qui coopère avec la bande d'amenée ou d'évacuation des marchandises à transporter (70) et qui porte, à son extrémité inférieure, un dispositif de réception ou de remise des marchandises (165), le bras en flèche (30) se composant d'un bras porteur (130) maintenu sur le portique (20) par l'une de ses extrémités (130a) et pivotant en hauteur autour d'un axe de pivotement horizontal (132), caractérisé en ce que le bras porteur porte, sur sa face inférieure (130b), un bâti porteur (40) relié de manière fixe au bras porteur (130), bâti porteur qui est configuré comme glissière pour un autre bâti porteur (50) maintenu dans ce bâti porteur (40) et déplaçable dans le sens horizontal au moyen d'un dispositif de commande (51), bâti porteur (50) qui peut sortir, de manière téléscopique du bâti porteur fixe (40) ou rentrer dans le bâti porteur fixe (40) et qui porte, à son extrémité libre antérieure (52), l'élévateur vertical (60) qui se compose d'un bâti porteur (160) déplaçable dans le sens vertical dans le bâti porteur téléscopique (50) dans sa zone terminale antérieure au moyen d'un dispositif de commande (161), bâti porteur (160) avec une plateforme de levage (162), avec une plateforme de transport (163), placée dans celui-ci et déplaçable dans le sens vertical au moyen d'un dispositif de commande (164), la plateforme de transport (163) de la plateforme de levage (162) pouvant se déplacer jusque dans la zone du dispositif de réception ou de remise des marchandises à transporter (165) disposé sur le bâti porteur (160) du côté du sol et, en fonction respectivement de la longueur de la zone de transport lorsque le bâti porteur (160) est abaissé, dans la zone de la bande d'amenée ou d'évacuation des marchandises à transporter (70) qui se compose d'une bande transporteuse (170) placée de manière fixe dans le bâti porteur téléscopique (50), d'une bande transporteuse (270) placée de manière fixe dans le bâti porteur fixe (40) et d'une bande transporteuse (370) placée entre les deux bandes transporteuses (170, 270) et pouvant se déplacer dans le sens horizontal au moyen d'un dispositif de commande (376) dont la longueur correspond au moins à la longueur ou à la largeur d'une palette, les brins supérieurs (170a, 270a, 370a) des trois bandes transporteuses (170, 270, 370) se trouvant dans un plan et la bande transporteuse déplaçable (370), qui est placée entre les deux bandes transporteuses (170, 270), étant déplaçable entre les deux bandes transporteuses (170, 270) respectivement dans la zone qui résulte de l'écartement respectif de la bande de transport (170), en fonction de la longueur de la zone de déploiement du bâti porteur téléscopique (50) avec sa bande transporteuse (170) et de la bande transporteuse (270) dans le bâti porteur fixe (40) et que les dispositifs de commande (174, 175, 275, 375, 376) pour la plateforme de levage (162), pour la bande transporteuse (170) dans le bâti porteur téléscopique (50), pour la bande transporteuse (270) dans le bâti porteur fixe (40) et pour la bande transporteuse déplaçable (370) sont réunis dans un organe de commande (80) de manière telle que, pour le déchargement, lorsqu'une marchandise à transporter atteint l'extrémité de la bande transporteuse (170), la bande transporteuse déplaçable (370) soit déplacée dans la position de transfert à la bande transporteuse (170), qu'elle se déplace, lorsque le transfert de la marchandise à transporter a eu lieu, vers la bande transporteuse (270) du bâti porteur fixe (40) et que, après la remise de la marchandise à transporter sur la bande transporteuse (270), la bande transporteuse déplaçable (370) se déplace vers la bande transporteuse (170) du bâti porteur téléscopique (50) et que, pour le chargement, le déplacement de la bande transporteuse déplaçable (370) se fait en sens inverse, le sens de rotation des bandes transporteuses (170, 270, 370) étant simultanément inversé, la vitesse de rotation des bandes transporteuses (170, 270, 370) et la vitesse de déplacement de la bande transporteuse déplaçable (370) pouvant être commandées par les mouvements de translation et la vitesse de déplacement de la plateforme de levage (162) en fonction du chemin parcouru par la bande transporteuse déplaçable (370).

2. Dispositif selon la revendication 1, caractérisé en ce que le bâti porteur (160) pour la plateforme de levage (162) et les bâtis porteurs (40, 50) pour les bandes transporteuses (170, 270, 370) sont constitués par des constructions à cadre complètement gainées.

3. Dispositif selon les revendications 1 et 2, caractérisé en ce que la bande transporteuse (170) du bâti porteur téléscopique (50) est guidée jusque dans la zone de déplacement de la plateforme de levage (162).

4. Dispositif selon les revendications 1 à 3, caractérisé en ce que le bâti porteur (40) sur le bras porteur (30) a une longueur qui est inférieure à la longueur du bras porteur (130) et qu'il est placé dans la zone arrière du bras porteur (130) sur celui-ci qui porte, à son extrémité antérieure, tournée vers l'élévateur vertical (60), un support de guidage (135) pour le bâti porteur téléscopique (50).

5. Dispositif selon les revendications 1 à 4, caractérisé en ce que le bâti porteur téléscopique (50) porte, à son extrémité libre antérieure (52), un cadre porteur (150) pour le bâti porteur (160) avec la plateforme de levage (162), le bâti porteur (160) étant maintenu et guidé dans ce cadre porteur (150).

6. Dispositif selon la revendication 5, caractérisé en ce que le cadre porteur (150) pour l'élévateur vertical (60) est articulé à l'extrémité antérieure libre (52) du bâti porteur téléscopique (50) et est pivotant en hauteur autour d'un axe horizontal (152).

7. Dispositif selon les revendications 1 à 6, caractérisé en ce que l'élévateur vertical (60) est configuré comme un transporteur hélicoïdal, un transporteur à collier de serrage ou équivalent.

8. Dispositif selon les revendications 1 à 7, caractérisé en ce que le bras porteur (130) porte, à son extrémité arrière (130a), à la suite du bâti porteur (40) relié au bras porteur (130), un bâti porteur vertical (260) dans lequel une plateforme de levage (262) avec une plateforme de transport (263) est placée en étant déplaçable et qui est équipé, à son extrémité située du côté du sol, d'un dispositif de réception ou de remise des marchandises à transporter (265).

9. Dispositif selon les revendications 1 à 8, caractérisé en ce que la plateforme de transport (163 ; 263) de chacune des plateformes de levage (162 ; 262) se compose d'au moins une bande transporteuse (166 ; 266) dont le sens de rotation est parallèle à celui des bandes transporteuses (170, 270, 370) ou de transporteurs à galets avec des galets commandés à rotation.

10. Dispositif selon les revendications 1 à 9, caractérisé en ce que toutes les bandes transporteuses (170, 270, 370) ont les mêmes vitesses de rotation.

11. Dispositif selon les revendications 1 à 10, caractérioé en ce que la vitesse de déplacement de la bande transporteuse déplaçable (370) correspond aux vitesses de rotation des bandes transporteuses (170, 270).

12. Dispositif selon les revendications 1 à 10, caractérisé en ce que la vitesse de déplacement de la bande transporteuse déplaçable (370) est supérieure à la vitesse de rotation des bandes transporteuses (170, 270).

13. Dispositif selon les revendications 1 à 12, caractérisé en ce que la vitesse de rotation de la bande transporteuse déplaçable (370) peut être mise hors service pendant le déplacement.

14. Dispositif selon les revendications 1 et 13, caractérisé en ce que la vitesse de déplacement de la bande transporteuse (370) peut être commandée en fonction de la profondeur de pénétration respective du bâti porteur (50) dans le bâti porteur (40).

15. Dispositif selon l'une des revendications précédentes 1 à 14, caractérisé en ce qu'à la place de la bande transporteuse (370) entre les deux bandes transporteuses (170, 270), les deux bandes transporteuses (170, 270) sont configurées en pouvant être téléscopiques pour surmonter l'espace intermédiaire entre les deux bandes transporteuses (170, 270), les deux bandes transporteuses (170, 270) étant équipées, à leurs extrémités tournées l'une vers l'autre, de portions de bande téléscopiques.

16. Dispositif selon les revendications 1 à 15, caractérisé en ce que la plateforme de transport (163) de la plateforme de levage (162) est équipée, sur sa face inférieure, d'un dispositif de levage (410) pour la fixation de courroies pour transport de palettes ou équivalent.

17. Dispositif selon la revendication 16, caractérisé en ce que la plateforme de transport (163) de la plateforme de levage (162) est équipée d'un dispositif de transport transversal (420) pour remettre les palettes soulevées par le dispositif de levage (410) à la bande transporteuse (170).

18. Dispositif selon les revendications 1 à 17, caractérisé en ce que le bâti porteur (160) présente, à son extrémité située du côté du sol (160a), un dispositif de réception ou de remise des marchandises à transporter (165) qui se compose d'une bande transporteuse (166) horizontale faisant saillie latéralement ou de deux bandes transporteuses (166) placées des deux côtés du bâti porteur (160), les bandes transporteuses (166) étant téléscopiques dans le sens horizontal et pouvant rentrer dans le bâti porteur (160).

19. Dispositif selon les revendications 1 à 18, caractérisé en ce qu'un dispositif de levage pour palettes (430) et un dispositif (440) pour introduire une palette de terminal (445) dans l'espace intermédiaire entre cette bande transporteuse (270) et la palette soulevée avec les marchandises à transporter et au-dessous de la palette sont placés dans la zone de la bande transporteuse (270) du bâti porteur placé en étant fixe (40).

FIG.1

FIG.2

17

FIG.3

163

162

420

410

170

163

60

162

163

410

160

y 4

y 4

166

166

162

163

FIG. 4

FIG.5